Europäisches Patentamt

European Patent Office

Office européen des brevets

(19)

(11) Publication number: **0 026 752**
**B1**

(12) **EUROPEAN PATENT SPECIFICATION**

(45) Date of publication of patent specification: **08.02.84**

(51) Int. Cl.³: **F 16 H 21/44, B 65 G 47/88**

(21) Application number: **80850139.9**

(22) Date of filing: **26.09.80**

(54) **A device for cyclically moving an object between two end positions.**

(30) Priority: **01.10.79 SE 7908098**

(43) Date of publication of application:
**08.04.81 Bulletin 81/14**

(45) Publication of the grant of the patent:
**08.02.84 Bulletin 84/6**

(84) Designated Contracting States:
**BE DE FR GB IT NL**

(56) References cited:
**CH - A - 450 267**
**DE - A - 1 913 593**
**DE - A - 1 925 556**
**DE - A - 2 020 834**
**DE - B - 1 195 233**
**FR - A - 2 273 742**
**US - A - 3 125 888**
**US - A - 3 216 547**

(73) Proprietor: **Propoflex, Ulf Tönnesen**
**Datavägen 55**
**S-436 00 Askim (SE)**

(72) Inventor: **Tönnesen, Ulf**
**Kobbegärden 44**
**S-43600 Askim (SE)**

(74) Representative: **MacFie, W.R.**
**Backers Patentbyra AB Drottninggatan 15**
**S-41114 Göteborg (SE)**

Courier Press, Leamington Spa, England.

# A device for cyclically moving an object between two end positions

On many occasions it may be interesting to move an object between two end positions, for instance for causing a blocking action, or for actuating a mechanism of some kind.

Known devices of this kind (e.g. CH — A 450.267) generally include a slider crank mechanism having a crank arm and a crank pin slidingly received in a slot of a lever pivotably supported by a shaft arranged perpendicularly to the longitudinal axis of the lever, and carrying the object remote from the pivot shaft.

The aim of the present invention is to propose a device, which in a simple manner ensures a movement of an object between desired end positions.

The device according to the invention is characterized in a reversible motor having its shaft parallel to the pivot shaft and driving the slider crank mechanism, the slot of the pivoted lever having a limited length to provide at least one stop for the crank pin, governing means for repeatedly activating the motor in opposite directions of rotation, each time to turn its shaft an angle exceeding what is necessary to move the crank pin from one stop position to the other, and a slipping clutch connecting the shaft of the motor with the crank mechanism.

The crank mechanism and the slot are preferably designed in such a manner that the crank mechanism, during each activation of the motor will perform an angular movement exceeding 180°, whereby the crank mechanism will be brought past its dead positions. The object will then be retained in each of its end positions, so any unintentional movement is prevented.

The lever is preferably adapted to swing to both sides of a horizontal plane through the shaft of the motor, the slot traversing a vertical plane through said motor shaft, and with the stop forming end of the slot turned towards the pivot shaft.

Governing means are preferably included to issue a first activating pulse of predetermined length to the motor and exceeding the energy-input necessary to rotate the crank mechanism the prescribed number of degrees, and, after a predetermined, or governed, moment of time to issue a second activating-pulse to the motor, of predetermined length and in the opposite direction to that of the first activating pulse.

The invention will below be described with reference to the accompanying drawings, which schematically illustrate the invention as used with a blocking grid at a conveyor, and where

Figure 1 schematically shows a portion of a conveyor having a blocking grid,

Figure 2 shows the blocking grid with its operating mechanism,

Figure 3 is a diagram defining the operation cycle, and

Figure 4 is a perspective, part-sectional view of blocking grid and crank mechanism.

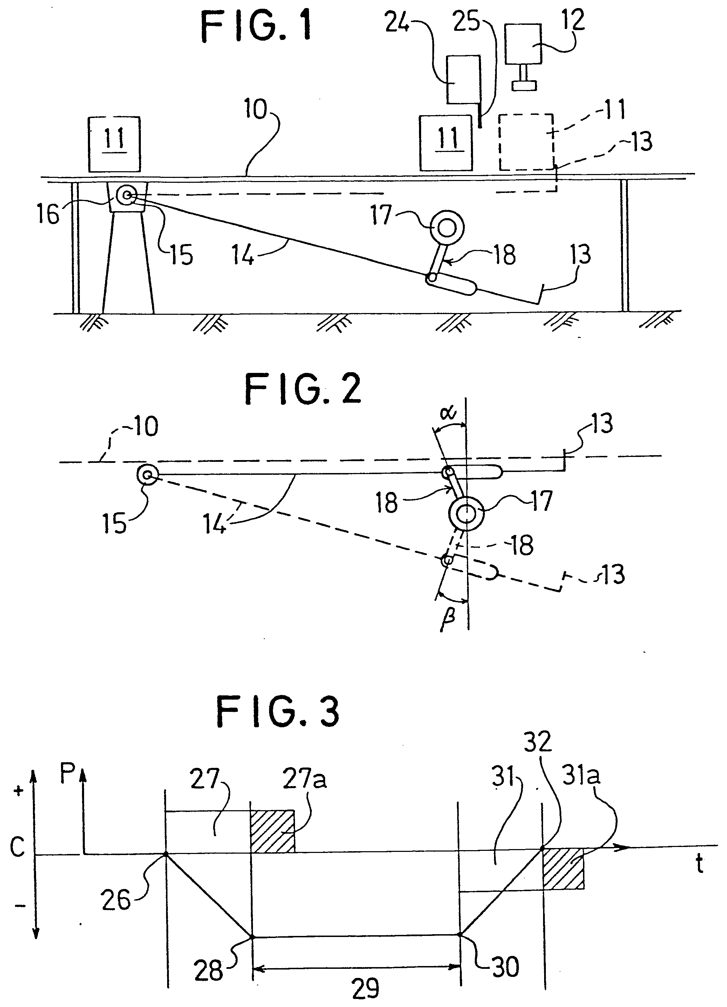

In Figure 1 reference 10 denotes a conveyor, upon which items 11, for instance boxes or the like, are moved in the direction from left to right in the drawing, to pass below a machine 12, which puts labels upon the items, or marks them in some other way, as they pass along. In order to obtain a satisfactory labelling or marking it is necessary that the individual item be stopped for a short moment, while the marking occurs. To that end a blocking grid 13 is provided, which may be made to project above the conveyor to catch an item, and to temporarily stop its movement.

The aim is to move the grid from a lower end position to an upper end position, and then back again after a predetermined moment of time.

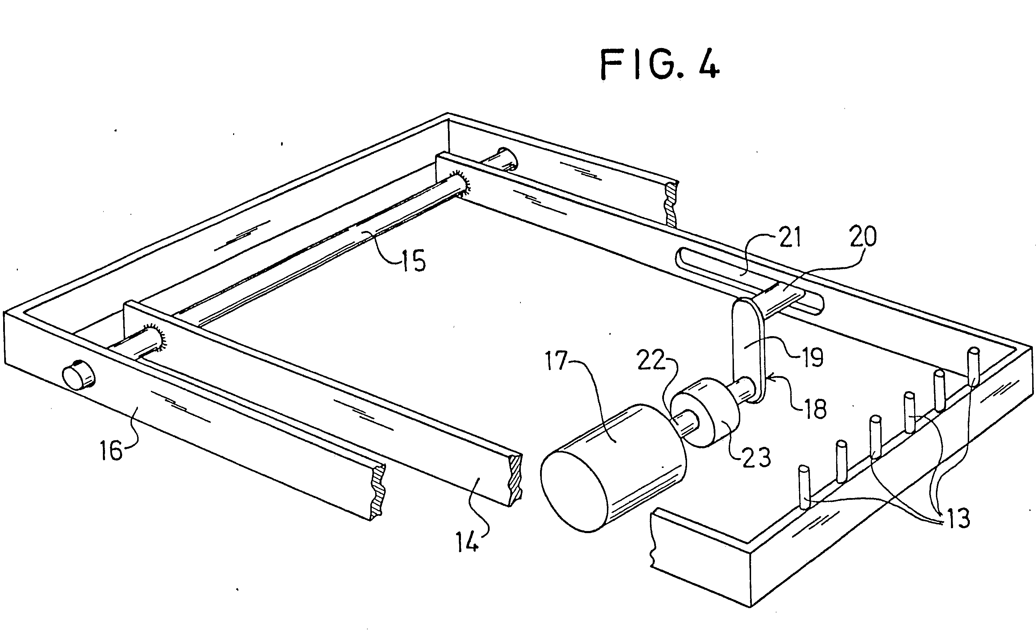

The grid is mounted upon a lever structure 14, which is pivotable about a shaft 15 at one end of the structure, and is carried by a frame 16. Between the shaft 15 and the grid 13 a reversible electric motor 17 is mounted, which in a manner explained in connection with Figures 2 and 4 actuates the lever structure by way of a crank mechanism 18.

Figure 2 shows in full lines the grid 13 and the carrying lever structure 14 in the upper end position, while the lower end position is shown in broken lines. The crank mechanism (see Figure 4) comprises a crank arm 19 and a crank pin 20, which operates in a slot 21 in a beam or other elongate member of the lever structure.

The shaft 22 of the driving motor 17 is arranged in parallel to the pivot shaft 15, and between the motor shaft and the crank mechanism 18 there is a slipping clutch 23. The length of the crank are 19 and of the slot 21 are selected so the crank mechanism can perform an angular movement slightly exceeding 180°, preferably with increments evenly distributed in relation to a vertical plane through the motor shaft.

In the position shown in Figure 4 crank pin 20 has not performed its full movement within slot 21, but from Figure 2 it is evident that the crank pin in one end position has moved an angle $\alpha$ past the vertical plane through its center of rotation. A clockwise movement in Figure 2 will bring the lever structure to its lower position, and the crank pin will then have moved an angle $\beta$ past the vertical plane. Hereby the grid 13 will be retained in each of the end positions, so it cannot be unintentionally moved from those, neither downwardly from the upper position, nor upwardly from the lower position.

At the conveyor there is a governing device 24 having a sensor 25, which is located slightly ahead of the position occupied by an item to be marked (and indicated in broken lines). This governing device will issue a first activating pulse to the motor to start rotating counter-clockwise for lifting the grid to its upper position and to retain it there during a predetermined period of time. Thereupon the governing device issues a second pulse to make the motor rotate clockwise so the grid is returned to its lower position.

The governing function and the influence of the slipping clutch is illustrated in the diagram in Figure 3, in which the abscissa defines the time t, and one ordinate defines the position P of the grid, and the other the supply of current C, which thus is considered positive for rotation in one direction, and negative for rotation in the opposite direction. The grid will normally rest in an upper position, so no item can pass. It is brought down to set a marked object free, and will then be automatically brought back up again. The sensor 25 reacts in point 26 and causes a current supply pulse to the motor, having a length denoted by 27. In point 28 the grid has reached its lower position and remains there for a period of time 29, which is selected with respect to the time required for an item to pass. In point 30 the governing device issues a second current supply pulse 31 in the opposite direction, so the crank mechanism is rotated counter-clockwise and the grid reaches its upper end position in point 32.

The magnitudes of the current supply pulses 27 and 31 are selected so the motor tends to rotate more than the half-turn necessary to move the grid between its two end positions. Hatched portions 27a and 31a of the current supply pulses will thus mean unnecessary work, which has to be taken care of by the slipping clutch, but which ensure that the movement will always extend to the desired end positions.

The embodiment described above is used with a blocking grid at a conveyor, but the invention may be brought to extended use within other technical fields, for instance to reciprocate a so called dispenser tongue. The grid 13 may for instance be substituted by a gripping device, which moves a component in to an out of a working machine.

The governing function is schematically indicated only at 24 and 25 and it is evident that the design and the location of the governing device may be selected in many ways depending upon the components, with which it shall cooperate. The time interval between the first and the second pulse may be predetermined so a return movement is caused when some primary function has been performed.

## Claims

1. A device for cyclically moving an object (13) between two end positions and including a slider crank mechanism having a crank arm (19) and a crank pin (20) slidingly received in a slot (21) of a lever (14) pivotably supported by a shaft (15) arranged perpendicularly to the longitudinal axis of the lever (14), and carrying the object (13) remote from the pivot shaft (15), characterized in a reversible motor (17) having a shaft (22) parallel to the pivot shaft (15) and driving the slider crank mechanism, the slot (21) of the pivoted lever (14) having a limited length to provide at least one stop for the crank pin (20), governing means (24) for repeatedly activating the motor in opposite directions of rotation, each time to turn its shaft (22) at an angle exceeding what is necessary to move the crank pin (20) from one stop position to the other, and a slipping clutch (23) connecting the shaft (22) of the motor with the crank mechanism (18).

2. A device according to claim 1, characterized in that the governing means (24) is designed so the shaft of the motor (17) during each activation performs an angular movement exceeding 180°. 3. A device according to claim 2, characterized in that the lever (14) is adapted to swing to both sides of a horizontal plane through the shaft (22) of the motor (17), the slot (21) traversing a vertical plane through said motor shaft (22), and with the stop forming end of the slot turned towards the pivot shaft (15).

4. A device according to either of claims 2 or 3, characterized in that the governing means (24) is adapted to issue a first activating pulse (27) of predetermined length to the motor (17) and, after a predetermined, or governed, moment of time to issue a second activating pulse (31) to the motor, of predetermined length and in opposite direction to that of the first activating pulse.

5. A device according to either of the preceeding claims, characterized in that the object (13) forms part of a blocking grid at a conveyor, and that the motor (17) is an electric motor.

6. A device according to either of claims 1—4, characterized in that the object (13) forms part of a so called dispenser tongue.

## Revendications

1. Dispositif pour le déplacement cyclique d'un objet (13) entre deux positions de fin de course, comprenant un mécanisme de manivelle à glissière comportant un bras de manivelle (19) et un maneton de manivelle (20) monté coulissant dans une fente (21) d'un levier (14) supporté d'une façon pivotante par un arbre (15) disposé perpendiculairement à l'axe longitudinal du levier (14), et supportant l'objet (13) à distance de l'arbre de pivotement (15), caractérisé par un moteur réversible (17) comportant un arbre (22) parallèle à l'arbre de pivotement (15) et entraînant le mécanisme de manivelle à glissière, la fente (21) du levier pivotant (14) ayant une longueur limitée, afin de créer au moins une butée pour le maneton de manivelle (20), des moyens de commande (24) destinés à actionner le moteur de façon répétitive dans des sens de rotation opposés, pour à chaque fois tourner l'arbre (22) d'un angle excédant celui nécessaire pour déplacer le maneton de manivelle (20) d'une position de butée vers l'autre, et un embrayage à friction (23) reliant l'arbre (22) du moteur au mécanisme de manivelle (18).

2. Dispositif selon la revendication 1, caractérisé en ce que les moyens de commande (24) sont conçus pour que l'arbre du moteur (17), pendant chaque actionnement, exécute un déplacement angulaire excédant 180°.

3. Dispositif selon la revendication 2, caractérisé en ce que le levier (14) est agencé pour basculer des deux côtés d'un plan horizontal passant par l'arbre (22) du moteur (17), la fente (21) traversant un plan vertical passant par l'arbre (22) du moteur, et l'extrémité formant butée de la fente étant tournée vers l'arbre de pivotement (15).

4. Appareil selon l'une des revendications 2 et 3, caractérisé en ce que les moyens de commande (24) sont agencés pour délivrer au moteur (17) une première impulsion d'actionnement (27) d'une longueur prédéterminée et, après une durée prédéterminée, ou commandée, pour délivrer au moteur une seconde impulsion d'actionnement (31), d'une longueur prédéterminée et d'un sens opposé à celui de la première impulsion d'actionnement.

5. Dispositif selon l'une des revendications précédentes, caractérisé en ce que l'objet (13) fait partie d'une grille de blocage d'un convoyeur, et que le moteur (17) est un moteur électrique.

6. Dispositif selon l'une des revendications 1 à 4, caractérisé en ce que l'objet (13) fait partie d'une languette dite de distribution.

**Patentansprüche**

1. Vorrichtung zum zyklischen Bewegen eines Objektes (13) zwischen zwei Endlagen, die eine Gleitkurbeleinrichtung umfaßt mit einem Kurbelarm (19) und einem Kurbelzapfen (20), der verschiebbar in einem Schlitz (21) eines Hebels (14) aufgenommen ist, der an einer Achse (15) schwenkbar gehalten ist, die senkrecht zur Längsachse des Hebels (14) angeordnet ist, und zum Tragen des von der Schwenkachse (15) abgewandten Objekts (13), gekennzeichnet durch einen umsteuerbaren Motor (17) mit einer zur Schwenkachse (17) parallelen Welle (22) zum Antreiben der Gleitkurbeleinrichtung, wobei der Schlitz (21) des geschwenkten Hebels (14) eine begrenzte Länge hat zur Bildung mindestens eines Anschlages für den Kurbelzapfen (20), eine Regeleinrichtung (24) zur wiederholten Betätigung des Motors in entgegengesetzten Drehrichtungen, um seine Welle (22) jedesmal um einen Winkel zu drehen, der den Winkel übersteigt, der notwendig ist, um den Kurbelzapfen (20) von einer Anschlagebene zur anderen Anschlagebene zu bewegen, und durch eine die Welle (22) des Motors mit der Kurbeleinrichtung (18) verbindende Rutschkupplung (23).

2. Vorrichtung nach Anspruch 1, dadurch gekennzeichnet, daß die Regeleinrichtung (24) so ausge-bildet ist, daß die Welle des Motors (17) während jeder Betätigung eine 180° übersteigende Winkelbewegung ausführt.

3. Vorrichtung nach Anspruch 2, dadurch gekennzeichnet, daß der Hebel (14) derart ausgebildet ist, daß er auf beide Seiten einer horizontalen Ebene durch die Welle (22) des Motors (17) schwingen kann, wobei der Schlitz (21) zu einer durch die Motorwelle (22) vertikalen Ebene quer verläuft und das einen Anschlag bildende Ende des Schlitzes zur Schwenkachse hin gerichtet ist.

4. Vorrichtung nach Anspruch 2 oder 3, dadurch gekennzeichnet, daß von der Regeleinrichtung (24) an den Motor (17) ein erster Betätigungsimpuls (27) vorbestimmter Länge und nach einer vorbestimmten oder geregelten Zeit an den Motor ein zweiter Betätigungsimpuls (31) vorbestimmter Länge und in der zu dem ersten Getätigungsimpuls entgegengesetzter Richtung abgebbar ist.

5. Vorrichtung nach einem der vorhergenannten Ansprüche, dadurch gekennzeichnet, das das Objekt (13) Teil eines Blockiergitters an einer Fördereinrichtung bildet und daß der Motor (17) ein Elektromotor ist.

6. Vorrichtung nach einem der Ansprüche 1 bis 4, dadurch gekennzeichnet, daß das Objekt (13) Teil einer sogenannten Verteilerzunge bildet.

# FIG. 1

# FIG. 2

# FIG. 3

# FIG. 4

14 15 16 17 18 19 20 21 22 23 13

0 026 752